# EUROPÄISCHE PATENTSCHRIFT

(11) **EP 3 175 116 B1**
(45) Veröffentlichungstag und Bekanntmachung des Hinweises auf die Patenterteilung: **02.03.2022**
(21) Anmeldenummer: 15739602.9
(22) Anmeldetag: 22.07.2015
(51) Int. Cl.: F16K 15/02, F04D 1/06, F04D 9/00

(54) **MANTELGEHÄUSEPUMPE MIT ENTLÜFTUNGSEINRICHTUNG SOWIE ZUGEHÖRIGES VERFAHREN**
BARREL-TYPE PUMP WITH VENTING DEVICE AND ASSOCIATED METHOD
POMPE DE TYPE À DOUBLE ENVELOPPE AVEC ÉLÉMENT DE PURGE D'AIR ET MÉTHODE ASSOCIÉE

(30) Priorität: 29.07.2014 DE 102014214805
(43) Veröffentlichungstag der Anmeldung: 07.06.2017
(73) Patentinhaber: KSB SE & Co. KGaA, 67227 Frankenthal (DE)
(72) Erfinder: EBERT, Sascha, 67227 Frankenthal (DE); ELSÄSSER, Thomas, 67227 Frankenthal (DE)
(86) Internationale Anmeldenummer: PCT/EP2015/066743
(87) Internationale Veröffentlichungsnummer: WO 2016/016060

(56) Entgegenhaltungen:
- EP-A1- 1 013 936
- DE-A1- 4 415 157
- SU-A1- 1 078 134

## Beschreibung

Die Erfindung betrifft eine Kreiselpumpe mit einem Mantelgehäuse gemäß dem Oberbegriff von Anspruch 1.

In dem Mantelgehäuse ist ein Einschub angeordnet ist, der eine Welle aufweist, auf der mindestens ein Laufrad angeordnet ist, das von einem Stufengehäuse umgeben ist, welches einen inneren Druckraum von einem äußeren Druckraum trennt.

Derartige Kreiselpumpenbauarten werden auch als Mantelgehäusepumpen, Doppelgehäusepumpen bzw. "Barrel-Type"-Pumpen oder Topfpumpen benannt. Eine solche Mantelgehäusepumpe wird beispielsweise in der DE 40 05 923 A1 beschrieben.

Diese Pumpen sind von einem topfähnlichen Gehäuse umgeben. Häufig handelt es sich hierbei um mehrstufige Pumpen zur Verwendung als Hoch- und Höchstdruckpumpen, insbesondere auch zum Einsatz als Kesselspeisepumpen in Kraftwerken. Zudem kommen solche mehrstufigen Mantelgehäusepumpen in der Stahlindustrie und in der Petrochemie, beispielsweise bei Raffinerien, zum Einsatz.

In der DE 43 10 467 A1 wird eine Kreiselpumpe in Topfgehäusebauart beschrieben. Zwischen den einzelnen Pumpenlaufrädern sind strömungsführende Stufengehäuse angeordnet.

Die DE 298 19 363 U1 betrifft eine Kreiselpumpe mit einem Mantelgehäuse. Das Mantelgehäuse verfügt über einen Einlass, durch den ein Fördermedium einströmt. In dem Mantelgehäuse ist ein Einschub angeordnet. Der Einschub besteht aus einer Welle, auf der mehrere Laufräder und Leiträder mit den zugehörigen Stufengehäusen angeordnet sind. Die Stufengehäuse trennen einen inneren Druckraum, in dem die Laufräder angeordnet sind, von einem äußeren Druckraum zwischen den Stufengehäusen und dem Mantelgehäuse.

Die DE 44 15 157 A1 beschreibt eine selbstansaugende mehrstufige Pumpe, bei welcher in einem Bereich zwischen Saugbereich und erster Pumpenstufe und einer an einem Druckstutzen angeschlossenen Druckleitung eine Vorrichtung in Form eines Ventils aufweist, welches das Einströmen von Gas aus dem Druckbereich in den Saugbereich während des Ansaugvorgangs verhindert.

Die EP 1 013 936 A1 offenbart für Pumpentypen, wie sie in der DE 44 15 157 A1 beschrieben werden, eine besondere Ausführungsform des Ventils.

SU1078134 offenbart eine Kreiselpumpe gemäß dem Oberbegriff des Anspruchs 1.

Mantelgehäusepumpen müssen vor ihrem Einsatz einer Druckprüfung unterzogen werden. Bei herkömmlichen Mantelgehäusepumpen wird dazu das Mantelgehäuse, welches die Druckhülle der Pumpe bildet, auf den maximalen Abpressdruck der Druckseite ausgelegt. Der Drucktest muss vor der Endmontage durchgeführt werden.

Aufgabe der Erfindung ist es, eine Mantelgehäusepumpe zu schaffen, bei der ein Drucktest im montierten Zustand möglich ist. Die Pumpe soll sich durch eine zuverlässige und kostengünstige Betriebsweise auszeichnen. Zudem soll sie eine hohe Lebensdauer aufweisen. Weiterhin soll sich die Mantelgehäusepumpe möglichst preiswert fertigen lassen und soll sich durch eine einfache Montage auszeichnen. Wiederholprüfungen in der Anlage sollen zeitsparend und risikoarm sein.

Diese Aufgabe wird durch eine Kreiselpumpe mit den Merkmalen des Anspruchs 1 und des zugehörigen Verfahrensanspruchs 7 gelöst. Bevorzugte Varianten sind in den Unteransprüchen ausgeführt.

Erfindungsgemäß ist in einem Stufengehäuse der Kreiselpumpe eine Öffnung zur Entlüftung eingebracht. Die erfindungsgemäße Kreiselpumpe ermöglicht das Füllen der Pumpe in komplett montiertem Zustand mit automatischer Entlüftung der Stufengehäuse. Im Gegensatz zu herkömmlichen Mantelgehäusepumpen, bei denen keine Luft aus einem inneren Druckraum über die Stufengehäuse entweichen kann, da die Trennfuge zwischen den Stufengehäusen metallisch dichtend ist, weist die erfindungsgemäße Pumpe eine Entlüftungseinrichtung auf.

Die Entlüftungseinrichtung umfasst erfindungsgemäß mindestens eine Öffnung, die den inneren Druckraum mit dem äußeren Druckraum verbindet. Bei herkömmlichen Kreiselpumpen nimmt die Umrüstung einer Pumpe zur hydrostatischen Druckprüfung beispielsweise in einem Kraftwerk oder in einer Raffinerie mehrere Arbeitstage in Anspruch. Dieser erhebliche Zeitaufwand wird beim Einsatz der erfindungsgemäßen Mantelgehäusepumpe größtenteils eingespart, da die wenigstens teilweise Demontage der Pumpe und das Trennen der Druckhülle in einen Hoch- und einen Niederdruckraum mittels eines Spezialwerkzeuges entfällt. Dies ermöglicht eine erhebliche Kostenreduzierung, da bei Kraftwerken bzw. in Raffinerien häufig mehrere Mantelgehäusepumpen zum parallelen Einsatz kommen und durch die erfindungsgemäße Konstruktion bei jeder dieser Pumpen ein erheblicher Arbeitsaufwand eingespart wird.

Die Pumpe wird im komplett montierten Zustand gefüllt und über die Entlüftungseinrichtung kann Luft aus dem inneren Druckraum über die Öffnung im Stufengehäuse entweichen. Somit wird eine Mantelgehäusepumpe mit einer automatischen Entlüftung der Stufengehäuse geschaffen.

Erfindungsgemäß umfasst die Entlüftungseinrichtung ein Element, das eine Freigabe eines Medienaustausches aus dem inneren Druckraum zum äußeren Druckraum oder eine Sperrung des Medienaustausches zwischen dem inneren und äußeren Druckraum bewirken kann. Dieses Element ermöglicht es, dass beim Füllen der Mantelgehäusepumpe Luft über die Entlüftungseinrichtung aus dem inneren Druckraum zunächst entweichen kann. Ist die Mantelgehäusepumpe mit dem Betriebsmedium, beispielsweise Wasser, gefüllt, so verschließt dieses Element die Öffnung und sperrt damit den Medienaustausch zwischen dem inneren und äußeren Druckraum. Dadurch wird verhindert, dass Betriebsmedium von dem äußeren Druckraum in den inneren Druckraum fließt.

Dieses Element ist in einer Führung angeordnet. Die Führung ermöglicht eine Verschiebung des Elements. Durch diese Verschiebung ist es möglich, dass das Element entweder einen Medienaustausch zwischen dem inneren und dem äußeren Druckraum freigibt, beispielsweise zur Entlüftung, oder einen Medienaustausch sperrt, sodass nach der Füllung der Mantelgehäusepumpe keine Betriebsflüssigkeit vom äußeren Druckraum in den inneren Druckraum zurückfließen kann.

Dazu ist im Stufengehäuse erfindungsgemäß eine Aufnahme eingebracht sein, in der das Element angeordnet ist. Bei der Aufnahme handelt es sich um eine Bohrung, in welcher das scheibenförmige Element positioniert wird Von den Wänden der Aufnahme werden dabei die seitliche Führung des Elements sowie eine Bewegungsbegrenzung gebildet.

Erfindungsgemäß geht die Öffnung in eine Aufnahme über. So ist auch die Öffnung als Bohrung in dem Stufengehäuse ausgeführt, wobei der Durchmesser der Öffnungsbohrung kleiner ist als der Durchmesser der Aufnahmebohrung, in der das Element platziert ist. Somit erweitert sich die zwischen dem inneren und äußeren Druckraum in dem Stufengehäuse eingebrachte Verbindung von einem kleineren Öffnungsdurchmesser zu einem größeren Aufnahmedurchmesser, der sowohl als Dichtfläche als auch zur Bewegungsbegrenzung des zur Abdichtung dienenden Elements dient.

Erfindungsgemäß ist zwischen den Wänden der Aufnahme und dem Element immer noch ein ausreichend großer freier Querschnitt vorhanden, der einen Luftaustritt ermöglicht. Die Luft strömt durch die Öffnung in die Aufnahme und dann durch den freien Querschnitt zwischen dem Element und den Wänden der Aufnahme in den äußeren Druckraum.

Das Element ist größer als die Öffnung ausgebildet. Dieses Merkmal ist Voraussetzung dafür, dass das Element die Öffnung bei einer Rückströmung des Betriebsmediums verschließen kann. Bei dieser Gestaltung der Erfindung ist die Entlüftungseinrichtung somit mit einer Rückströmsicherung ausgerüstet. Steigt der Druck im äußeren Druckraum über den Druck im inneren Druckraum, wird das Element auf die Öffnung gepresst und ein Medienaustausch wird verhindert.

Das scheibenförmige Element wird dabei auf den Boden der Aufnahme gepresst und verschließt die in dem Boden der Aufnahme eingebrachte Öffnung mittels einer geeigneten Dichtflächengestaltung, z. B. eine zum Stufengehäuse gerichtete, ringförmige Erhebung, die einstückig mit dem Element ausgebildet ist.

Vorzugsweise weist die Entlüftungseinrichtung einen Anschlag für das Element auf.

Dieser kann beispielsweise an den Wänden der Aufnahme angeordnet sein. Dabei kann es sich um einen Vorsprung handeln, der in die Aufnahme hineinragt und somit ein Herausspülen oder Verklemmen des Elementes aus der Aufnahme verhindert. Vorzugsweise ragt dabei der Anschlag nur an einigen Stellen in die Aufnahme hinein, sodass immer noch ein freier Querschnitt zum Austritt der Luft bleibt.

Die Entlüftungseinrichtung ist vorzugsweise in einem oberen Bereich des Stufengehäuses angeordnet, wobei sich insbesondere eine 12-Uhr-Position eignet, da sich die Luft am höchsten Punkt sammelt.

Eine weitere Aufgabe der Erfindung besteht darin, ein Verfahren zur Durchführung der Druckprüfung einer Mantelgehäusepumpe zur Verfügung zu stellen.

Erfindungsgemäß wird die Mantelgehäusepumpe zunächst komplett montiert. Dann wird die Kreiselpumpe mit Betriebsmedium gefüllt. Im erfindungsgemäßen Verfahren kann in komplett montiertem Zustand Luft aus den Stufengehäusen entweichen. Weitere Vorteile und Merkmale der Erfindung ergeben sich aus der Beschreibung eines Ausführungsbeispiels anhand von Zeichnungen und aus den Zeichnungen selbst.

Dabei zeigt:
- Figur 1: einen Axialschnitt durch eine Mantelgehäusepumpe,
- Figur 2: eine schematische Darstellung der Entlüftungseinrichtung.

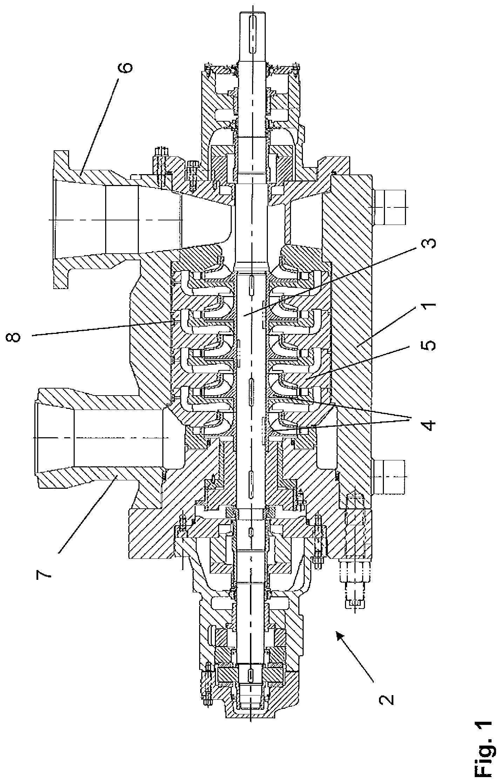

Figur 1 zeigt eine Kreiselpumpe mit einem Mantelgehäuse 1. In dem Mantelgehäuse 1 ist ein Einschub 2 angeordnet. Der Einschub 2 umfasst eine Welle 3, auf der mehrere Laufräder 4 hintereinander angeordnet sind. Bei den Laufrädern 4 handelt es sich im Ausführungsbeispiel um Radialräder.

Jedes Laufrad 4 ist von einem Stufengehäuse 5 umgeben. Benachbarte Stufengehäuse 5 grenzen aneinander an. Die Trennfuge zwischen den Stufengehäusen 5 ist im Ausführungsbeispiel metallisch dichtend.

Am Mantelgehäuse 1 ist ein Saugstutzen 6 angeformt, durch den das Betriebsmedium in die Kreiselpumpe eintritt. Über einen Druckstutzen 7 verlässt das Betriebsmedium die Kreiselpumpe.

Erfindungsgemäß ist in den Druckgehäusen 5 in einem oberen Bereich, jeweils in 12-Uhr-Stellung eine Entlüftungseinrichtung 8 angeordnet. Die erfindungsgemäße Mantelgehäusepumpe kann somit im komplett montierten Zustand einer Druckprüfung unterzogen werden. Dies wird durch die Integration der Entlüftungseinrichtungen 8 erst ermöglicht. Die Entlüftungseinrichtungen 8 sorgen dafür, dass die bereits komplett in der Anlage montierten Mantelgehäusepumpen gefüllt werden können und dabei Luft über die Entlüftungseinrichtungen 8 entweichen kann.

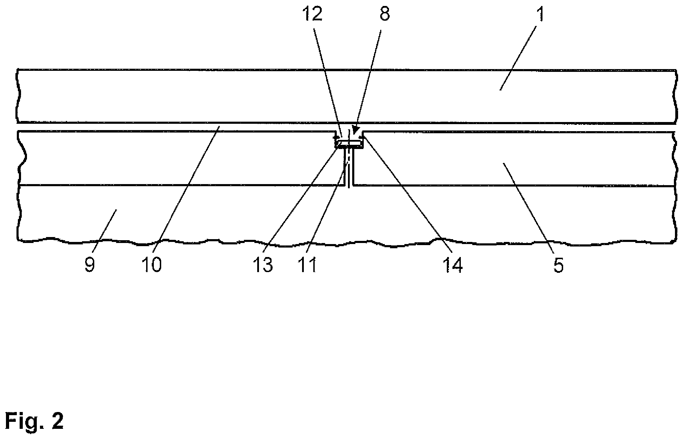

Figur 2 zeigt eine schematische Darstellung einer Entlüftungseinrichtung 8. Die Entlüftungseinrichtung 8 ist in jedes Stufengehäuse 5 integriert. Das Stufengehäuse 5 trennt einen inneren Druckraum 9 von einem äußeren Druckraum 10. Der innere Druckraum 9 ist um die Laufräder 4 angeordnet. Der äußere Druckraum 10 befindet sich zwischen dem Stufengehäuse 5 und dem Mantelgehäuse 1 und steht drucktechnisch mit dem Inneren des Druckstutzens 7 in Verbindung.

Erfindungsgemäß umfasst die Entlüftungseinrichtung 8 eine Öffnung 11, die in das Stufengehäuse 5 als Bohrung eingebracht ist. Weiterhin umfasst die Entlüftungseinrichtung 8 eine Aufnahme 12. Bei der Aufnahme 12 handelt es sich um eine Vertiefung, die als kreisförmige Aussparung in die äußere Mantelfläche des Stufengehäuses 5 in Form einer Bohrung eingebracht ist. Sie bildet einen Bereich der Öffnung 11 mit vergrößertem Innendurchmesser. In der Aufnahme 12 ist ein Element 13 angeordnet. Bei dem Element 13 handelt es sich um ein scheibenartiges Element, das zylinderförmig ausgebildet ist. Der Durchmesser des Elements 13 ist kleiner als der Durchmesser der Aufnahme 12, sodass das Element 13 in radialer Richtung verschieblich in der Aufnahme 12 angeordnet ist.

Bei der in Figur 2 dargestellten Variante umfasst die Entlüftungseinrichtung 8 einen Anschlag 14, der verhindert, dass das Element 13 aus der Aufnahme 12 hinausgetragen wird. Bei dem Anschlag 14 kann es sich um Vorsprünge handeln, die in die Aufnahme 12 hineinragen oder um einen in eine in der Aufnahme 12 vorgesehene Ringnut eingesetzten Sprengring.

Wird die Mantelgehäusepumpe zur Druckprüfung mit Betriebsmedium gefüllt, so wird das Element 13 nach oben bzw. in radialer Richtung nach außen gedrückt und gibt einen freien Querschnitt zum Entweichen der Luft frei. Der Anschlag 14 gilt als Sicherungselement und verhindert, dass das Element 13 aus der Aufnahme 12 hinausgetragen wird, beispielsweise durch Vibrationen im Betrieb oder durch den Luftstrom beim Entlüften. Beim Füllvorgang hebt das ansteigende Betriebsmedium im inneren Druckraum 9 das Element 13 durch die hydrostatische Wassersäule solange an, bis die komplette Luft entwichen ist. Das vollständig entlüftete System wird nun in Betrieb genommen. Im Betrieb stellt sich ein höherer Betriebsdruck im äußeren Druckraum 10 gegenüber dem inneren Druckraum 9 ein. Durch diese Druckdifferenz wird das Element an den Boden der Aufnahme 12 des Stufengehäuses 5 gepresst. Das Element 13 ist als Dichtelement ausgeführt und verhindert, dass Betriebsmedium vom äußeren Druckraum 10 in den inneren Druckraum 9 zurückfließt. Dazu sind die Kontaktflächen zwischen dem Boden der Aufnahme 12 und dem Element 13 so ausgeführt, dass eine zuverlässige Abdichtung gewährleistet wird.

Die erfindungsgemäße Entlüftungseinrichtung kommt vollständig ohne Federelemente aus. Durch den Verzicht auf Federelemente erweist sich die erfindungsgemäße Entlüftungseinrichtung als verschleißfrei und wartungsarm. Sie zeichnet sich durch eine zuverlässige Betriebsweise und eine hohe Lebensdauer aus. Außer dem Betriebsmedium wird zudem keine weitere Energiequelle benötigt. Somit ist die erfindungsgemäße Entlüftungseinrichtung unabhängig von äußeren Energiequellen und erhöht nicht zusätzlich die Betriebskosten.

## Patentansprüche

1. Kreiselpumpe mit Laufrädern (4), einem Druckstutzen (7), einem Mantelgehäuse (1) und mindestens einem Stufengehäuse (5), welches einen inneren Druckraum (9) von einem äußeren Druckraum (10) trennt, wobei der innere Druckraum (9) um die Laufräder (4) angeordnet ist und sich der äußere Druckraum (10) zwischen dem Stufengehäuse (5) und dem Mantelgehäuse (1) befindet und drucktechnisch mit dem Inneren des Druckstutzens (7) in Verbindung steht, wobei in dem Stufengehäuse (5) mindestens eine Entlüftungseinrichtung (8) angeordnet ist,
wobei
die Entlüftungseinrichtung (8) eine in das Stufengehäuse (5) als Bohrung eingebrachte, den inneren Druckraum (9) mit dem äußeren Druckraum (10) verbindende Öffnung (11) und eine Aufnahme (12) umfasst, wobei es sich bei der Aufnahme (12) um eine Vertiefung handelt, die als kreisförmige Aussparung in die äußere Mantelfläche des Stufengehäuses (5) in Form einer Bohrung eingebracht ist,
**dadurch gekennzeichnet, dass**
die Aufnahme (12) einen Bereich der Öffnung (11) mit vergrößertem Innendurchmesser bildet, und dass die Entlüftungseinrichtung (8) ein scheibenartiges Element (13) zur Freigabe oder zur Sperrung eines Medienaustauschs zwischen dem inneren Druckraum (9) und dem äußeren Druckraum (10) umfasst, das in radialer Richtung verschieblich in der Aufnahme (12) angeordnet ist, wobei zwischen den Wänden der Aufnahme (12) und dem scheibenartigen Element (13) ein freier Querschnitt für einen Medienaustausch vorhanden ist.

2. Kreiselpumpe nach Anspruch 1, **dadurch gekennzeichnet, dass** das Element (13) in einer Führung angeordnet ist.

3. Kreiselpumpe nach einem der Ansprüche 1 oder 2, **dadurch gekennzeichnet, dass** in den Boden der Aufnahme (12) die Öffnung (11) eingebracht ist.

4. Kreiselpumpe nach einem der Ansprüche 1 bis 3, **dadurch gekennzeichnet, dass** das Element (13) größer als die Öffnung (11) ausgebildet ist.

5. Kreiselpumpe nach einem der Ansprüche 1 bis 4, **dadurch gekennzeichnet, dass** die Entlüftungseinrichtung (8) einen Anschlag (14) für das Element (13) aufweist.

6. Kreiselpumpe nach einem der Ansprüche 1 bis 5, **dadurch gekennzeichnet, dass** die Entlüftungseinrichtung (8) in einem oberen Bereich des Stufengehäuses (5), vorzugsweise in einer 12-Uhr-Stellung, angeordnet ist.

7. Verfahren zur Durchführung einer Druckprüfung bei einer Kreiselpumpe nach einem der Ansprüche 1 bis 6 mit folgenden Schritten:
- Montage der Kreiselpumpe in einer Anlage,
- Füllen der Kreiselpumpe mit Betriebsmedium,
- Entweichen von Luft aus einem inneren Druckraum (9) über ein Stufengehäuse (5) in einen äußeren Druckraum (10).

## Claims

1. Centrifugal pump having impellers (4), having a pressure connector (7), having a barrel-type casing (1), and having at least one stage casing (5) which separates an inner pressure space (9) from an outer pressure space (10), wherein the inner pressure space (9) is arranged around the impellers (4), and the outer pressure space (10) is situated between the stage casing (5) and the barrel-type casing (1) and is connected in terms of pressure to the interior of the pressure connector (7), wherein at least one venting device (8) is arranged in the stage casing (5),
wherein the venting device (8) comprises an opening (11), which is formed as a bore in the stage casing (5) and connects the inner pressure space (9) to the outer pressure space (10), and a receptacle (12), wherein the receptacle (12) is a depression which is formed, in the form of a bore, as a circular cutout in the outer lateral surface of the stage casing (5),
**characterized in that**
the receptacle (12) forms a region of the opening (11) with enlarged inner diameter,
and **in that** the venting device (8) comprises a disc-like element (13) which serves for enablement, or for blocking, of exchange of media between the inner pressure space (9) and the outer pressure space (10) and which is arranged in the receptacle (12) so as to be radially displaceable, wherein a free cross section for exchange of media is present between the walls of the receptacle (12) and the disc-like element (13).

2. Centrifugal pump according to Claim 1, **characterized in that** the element (13) is arranged in a guide.

3. Centrifugal pump according to either of Claims 1 and 2, **characterized in that** the opening (11) is formed in the base of the receptacle (12).

4. Centrifugal pump according to one of Claims 1 to 3, **characterized in that** the element (13) is formed to be larger than the opening (11).

5. Centrifugal pump according to one of Claims 1 to 4, **characterized in that** the venting device (8) has a stop (14) for the element (13).

6. Centrifugal pump according to one of Claims 1 to 5, **characterized in that** the venting device (8) is arranged in an upper region of the stage casing (5), preferably in a 12 o'clock position.

7. Method for carrying out a pressure test in a centrifugal pump according to one of Claims 1 to 6, comprising the following steps:
- installation of the centrifugal pump in an installation,
- filling of the centrifugal pump with operating medium,
- escape of air from an inner pressure space (9) into an outer pressure space (10) via a stage casing (5).

## Revendications

1. Pompe centrifuge munie de rotors (4), d'un tuyau de refoulement (7), d'un carter enveloppant (1) et d'au moins un carter échelonné (5), qui sépare une chambre de pression intérieure (9) d'une chambre de pression extérieure (10), la chambre de pression intérieure (9) étant agencée autour des rotors (4) et la chambre de pression extérieure (10) se trouvant entre le carter échelonné (5) et le carter enveloppant (1) et étant reliée en termes de pression avec l'espace intérieur du tuyau de refoulement (7), au moins un dispositif de purge d'air (8) étant agencé dans le carter échelonné (5),
le dispositif de purge d'air (8) comprenant une ouverture (11) ménagée dans le carter échelonné (5) en tant que perçage, reliant la chambre de pression intérieure (9) à la chambre de pression extérieure (10), et un logement (12), le logement (12) consistant en un creux, qui est ménagé en tant qu'évidement circulaire dans la surface d'enveloppe extérieure du carter échelonné (5) sous la forme d'un perçage,
**caractérisée en ce que**
le logement (12) forme une zone de l'ouverture (11) de diamètre intérieur agrandi,
et **en ce que** le dispositif de purge d'air (8) comprend un élément de type disque (13) pour la libération ou le blocage d'un échange de milieu entre la chambre de pression intérieure (9) et la chambre de pression extérieure (10), qui est agencé dans le logement (12) de manière mobile dans la direction radiale, une section transversale libre pour un échange de milieu étant présente entre les parois du logement (12) et l'élément de type disque (13).

2. Pompe centrifuge selon la revendication 1, **caractérisée en ce que** l'élément (13) est agencé dans un guide.

3. Pompe centrifuge selon l'une quelconque des revendications 1 ou 2, **caractérisée en ce que** l'ouverture (11) est ménagée dans le fond du logement (12) .

4. Pompe centrifuge selon l'une quelconque des revendications 1 à 3, **caractérisée en ce que** l'élément (13) est configuré plus grand que l'ouverture (11).

5. Pompe centrifuge selon l'une quelconque des revendications 1 à 4, **caractérisée en ce que** le dispositif de purge d'air (8) comprend une butée (14) pour l'élément (13).

6. Pompe centrifuge selon l'une quelconque des revendications 1 à 5, **caractérisée en ce que** le dispositif de purge d'air (8) est agencé dans une zone supérieure du carter échelonné (5), de préférence à une position à 12 heures.

7. Procédé de réalisation d'un essai de pression dans une pompe centrifuge selon l'une quelconque des revendications 1 à 6, comprenant les étapes suivantes :
- le montage de la pompe centrifuge dans une installation,
- le remplissage de la pompe centrifuge avec un milieu d'exploitation,
- le déchargement d'air à partir d'une chambre de pression intérieure (9) par l'intermédiaire d'un carter échelonné (5) dans une chambre de pression extérieure (10) .
